# EUROPEAN PATENT APPLICATION

(11) **EP 4 775 324 A2**
(43) Date of publication of application: **15.07.2026**
(21) Application number: 26182311.6
(22) Date of filing: 30.03.2023
(51) Int. Cl.: B21D 37/14

(54) **TOOL STORAGE DEVICE AND BENDING SYSTEM**

(30) Priority: 04.04.2022 JP 2022062509
(62) Divisional of application: 23784703.3
(71) Applicant: Amada Co., Ltd., Isehara-shi, Kanagawa 259-1196 (JP)
(72) Inventor: SATO, Masaaki, Isehara-shi, 259-1196 (JP); YAMADA, Hideto, Isehara-shi, 259-1196 (JP)
(74) Representative: Grünecker Patent- und Rechtsanwälte PartG mbB

(57) **Abstract**

The present invention provides a tool storage device for storing a plurality of tools to be replaced by an operator with respect to tool holders provided in a left-right direction on a table of a bending machine, the tool storage device comprising:
a rack body arranged on a side of the bending machine in the left-right direction, the rack body provided with an opening on a front side; and
a tool table configured to be pulled out in a front-rear direction,
wherein a plurality of lower tools to be attached to a lower tool holder of a lower table of the bending machine are mounted on the tool table in the front-rear direction, and
wherein a lock lever of the bending machine advances to a lock position in the left-right direction and enters a lock groove of the tool table, so that movement of the tool table in the front-rear direction is restricted.

## Description

### [TECHNICAL FIELD]

The present disclosure relates to a tool storage device and a bending system.

### [BACKGROUND ART]

Patent Literature 1 discloses a tool magazine arranged on a side of a bending machine such as a press brake. A plurality of storage rails are arranged in a magazine housing of the tool magazine. A plurality of tools are arranged on the storage rails in such a manner that the tools are lined up one behind the other in the longitudinal direction of the storage rails. Each of the storage rails can be pulled out from a front side of the magazine housing in the longitudinal direction of the storage rails.

### [Citation List]

### [Patent Literature]

[Patent Literature 1] Japanese Unexamined Patent Application Publication No. 2020-501911

### [SUMMARY OF INVENTION]

In the method disclosed in Patent Literature 1, the plurality of tools is arranged with respect to the storage rails so that the width direction of the tool is in a front-rear direction. On the other hand, the table of the bending machine extends in a left-right direction. Therefore, when the tools are attached to the bending machine, it is necessary to rotate the orientation of the tools after taking them out from the storage rails. For this reason, there is a disadvantage that work efficiency is poor when the tools are mounted on the bending machine.

The present invention is defined in the independent claims. Preferred embodiments are laid down in the dependent claims. A tool storage device according to one aspect of the present disclosure stores a plurality of tools to be replaced by an operator with respect to tool holders provided in a left-right direction on a table of a bending machine. The tool storage device includes a rack body arranged on a side of the bending machine in the left-right direction and provided with an opening on a front side, and tool holding units provided inside the rack body and holding the tools. The tool holding units include a stocker linearly provided with tool holding grooves for holding the tools, and a stocker moving unit for advancing and retracting the stocker in a front-rear direction and horizontally rotating the stocker. The stocker has, as states between which switching can be performed by manual operation of the operator, a first state in which the tool holding grooves are stored in the rack body an orientation in a front-rear direction, and a second state in which the stocker advances to the outside of the rack body and the tool holding grooves are aligned in the left-right direction along a holder groove of the tool holder.

The tool storage device according to one aspect of the present disclosure allows a forward and backward movement of the stocker and a horizontal rotation of the stocker by the stocker moving unit. The operator can arrange the stocker on a side of the tool holder by advancing the stocker stored in the rack body in the front-rear direction forward and changing the orientation of the stocker to be in the left-right direction. Thus, the tool holding groove of the stocker can be aligned in the left-right direction along the holder groove of the tool holder, so that the tools can be arranged in parallel on an extended line of the holder groove of the tool holder. Therefore, a tool held by a stocker can be arranged on the tool holder only by sliding the tool in the left-right direction.

According to one aspect of the present disclosure, the operator can perform the forward and backward movement of the stocker and the horizontal rotation of the stocker in a series of operations, so that the tool held by the stocker can be transferred to the tool holder in a smooth manner. Thus, work efficiency can be improved when tools are attached to the tool holder of the bending machine.

### [BRIEF DESCRIPTION OF DRAWINGS]

[FIG. 1] FIG. 1 is a diagram illustrating a main part of a tool storage device.
[FIG. 2] FIG. 2 is a diagram illustrating a configuration of a bending system according to a first embodiment.
[FIG. 3] FIG. 3 is a front view illustrating the main part of the tool storage device.
[FIG. 4] FIG. 4 is a side view illustrating the main part of the tool storage device.
[FIG. 5] FIG. 5 is an enlarged perspective view illustrating the main part of a stocker.
[FIG. 6] FIG. 6 is a diagram for explaining a table- side fixing block provided on an upper table side of the bending machine.
[FIG. 7] FIG. 7 is an enlarged side view illustrating a main part of the stocker.
[FIG. 8] FIG. 8 is a diagram for explaining replacement operation of long upper tools using an upper stage storage unit.
[FIG. 9] FIG. 9 is a diagram for explaining operation of attaching long upper tools of the stocker on an upper tool holder.
[FIG. 10] FIG. 10 is a diagram for explaining the replacement operation of long lower tools using a middle stage storage unit.
[FIG. 11] FIG. 11 is a diagram for explaining a connecting portion and a lock lever included in the bending machine.
[FIG. 12] FIG. 12 is a diagram for explaining an operation of attaching long lower tools of an intermediate tool table on a lower holder.
[FIG. 13] FIG. 13 is a diagram for explaining the replacement operation of short upper tools and short lower tools using the lower stage storage unit.
[FIG. 14] FIG. 14 is a diagram for explaining a main part of the tool storage device according to a second embodiment.
[FIG. 15] FIG. 15 is a diagram for explaining a main part of a tool storage device according to a second embodiment.
[FIG. 16] FIG. 16 is a diagram for explaining a main part of a tool storage device according to a third embodiment.
[FIG. 17] FIG. 17 is a diagram for explaining a configuration of a tool holding unit.
[FIG. 18] FIG. 18 is a top view for explaining a guide table and the stocker moving on the guide table.
[FIG. 19] FIG. 19 is a diagram for explaining operation of transferring a long upper tool of the stocker to the upper tool holder.

### [DESCRIPTION OF EMBODIMENTS]

A tool storage device and a bending system according to the present embodiment will be described below with reference to the drawings.

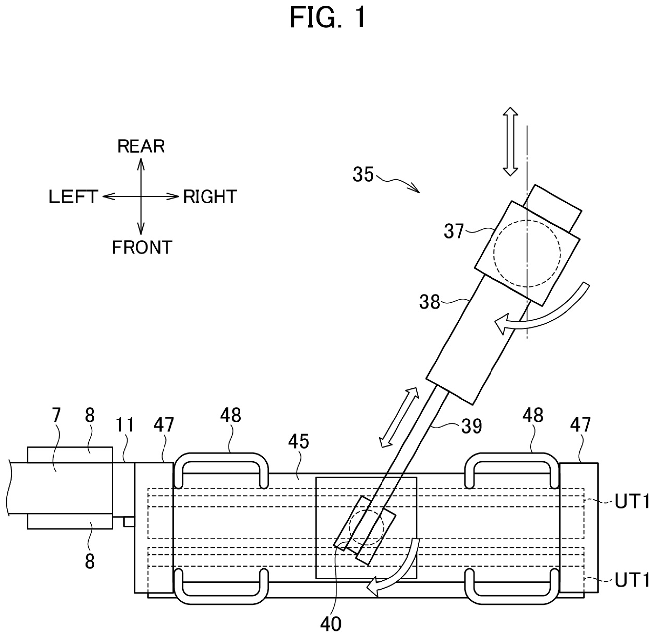

FIG. 1 is a view for explaining a main part of a tool storage device. In describing the configuration of the tool storage device and the bending system, a left-right direction, a front-rear direction, and an up-down direction are used as definitions of directions. The left-right direction and the front-rear direction correspond to two directions orthogonal to each other in a horizontal direction, and an up-down direction corresponds to a vertical direction. However, these directions are only used for convenience in order to explain the tool storage device and the bending system in this embodiment.

A tool storage device 2 according to the present embodiment stores a plurality of long upper tools UT1, and an operator replaces the long upper tools UT1 with respect to an upper tool holder 8 provided on an upper table 7 of a bending machine in the left-right direction. The tool storage device 2 includes a rack body 20 arranged on a side of a bending machine 1 in the left-right direction, having an opening on a front side thereof, and tool holding units 35 provided inside the rack body 20 for holding the long upper tools UT1. The tool holding units 35 include a stocker 45 in which tool holding grooves 46 for holding the long upper tools UT1 are linearly provided, and a stocker moving unit which advances and retracts the stocker 45 in the front-rear direction and horizontally rotates the stocker 45. The stocker 45 has a first state in which the tool holding grooves 46 are stored in the rack body 20 in an orientation in the front-rear direction and a second state in which the tool holding grooves 46 are advanced to the outside of the rack body 20 and aligned in the left-right direction along a holder groove of the upper tool holder 8. Switching can be performed by a manual operation of the operator between both states.

In this embodiment, the stocker moving unit includes an advancing and retracting mechanism provided in the rack body 20 so as to be movable in the front-rear direction, advancing and retracting the stocker 45 through the opening, and a stocker rotation part 40 connecting the advancing and retracting mechanism and the stocker 45 to each other, horizontally rotating the stocker 45 around a stocker rotation axis in the up-down direction.

### (First Embodiment)

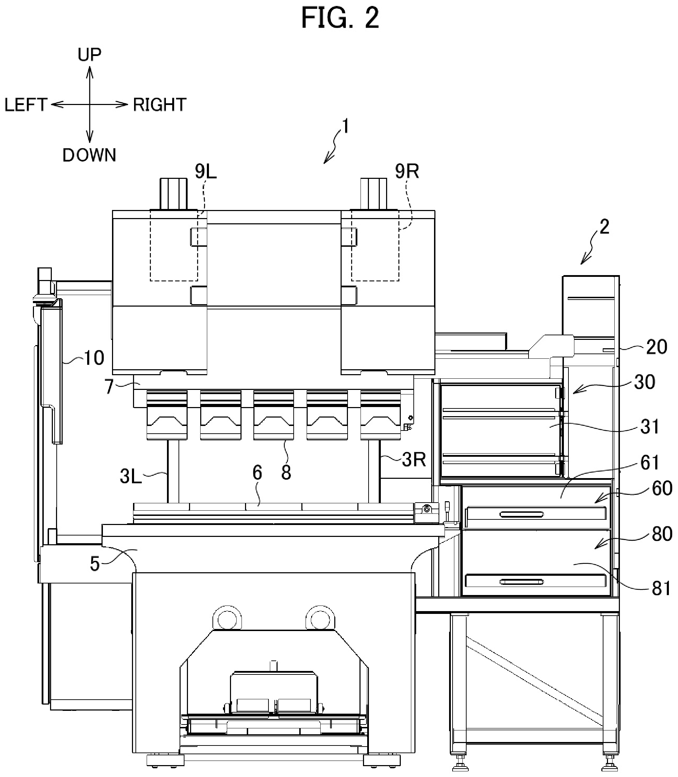

Hereinafter, a tool storage device according to a first embodiment and a bending system including a tool storage device will be described in detail. FIG. 2 is a diagram illustrating a configuration of a bending system according to the first embodiment. The bending system includes the bending machine 1 and the tool storage device 2.

The bending machine 1 is a machine for bending a plate-like workpiece, such as sheet metal. The bending machine 1 is, for example, a press brake, and bends a workpiece in cooperation with an upper tool such as a punch, and a lower tool such as a die.

The bending machine 1 includes left and right side frames 3L and 3R, a lower table 5, an upper table 7, and left and right drive mechanisms 9L and 9R.

The left and right side frames 3L and 3R are arranged so as to be opposed to each other, and are arranged separated by a distance in the left-right direction. The lower table 5 extends in the left-right direction and is supported by front lower parts of the left and right side frames 3L and 3R. The upper table 7 extends in the left-right direction and is supported by front upper parts of the left and right side frames 3L and 3R. The upper table 7 is configured so as to be movable with respect to the left and right side frames 3L and 3R in the up-down direction.

A lower tool holder 6 for detachably holding a lower tool is provided on an upper side of the lower table 5 in the left-right direction. A holder groove for holding a base portion (shank portion) of the lower tool is formed in the lower tool holder 6 in the left-right direction.

The upper tool holder 8 for detachably holding the upper tools is formed on a lower side of the upper table 7 in the left-right direction. A holder groove for holding a base portion (shank portion) of an upper tool is formed on the upper tool holder 8 in the left-right direction.

The left and right drive mechanisms 9L and 9R are provided above left and right upper parts of the side frames 3L and 3R, respectively. The left and right drive mechanisms 9L and 9R function as lifting mechanisms for moving the upper table 7 in the up-down direction. The left and right drive mechanisms 9L and 9R are configured as an electric motor, a ball screw mechanism, or the like, but may be a hydraulic cylinder or the like.

The left side frame 3L supports a control device 10 such as a numerical control (NC) device for controlling the operation of the bending machine 1.

As will be described later, the bending machine 1 of the present embodiment includes, in addition to the above configuration, a table-side fixing block 11, a connecting unit 15, and a lock lever 16. The table-side fixing block 11 is provided on a side of the upper tool holder 8 arranged at a right end of the upper table 7. The connecting unit 15 and the lock lever 16 are provided at a right end of the lower table 5. Details of the table-side fixing block 11, the connecting unit 15, and the lock lever 16 will be described later.

In the bending machine 1 having such a configuration, a workpiece is positioned on a lower tool attached to the lower tool holder 6 of the lower table 5. When the upper table 7 having an upper tool attached to the upper tool holder 8 is lowered toward the lower table 5, the workpiece is pressed between the upper tool and the lower tool. The workpiece is bent at a desired target bending angle by cooperation between the upper tool and the lower tool.

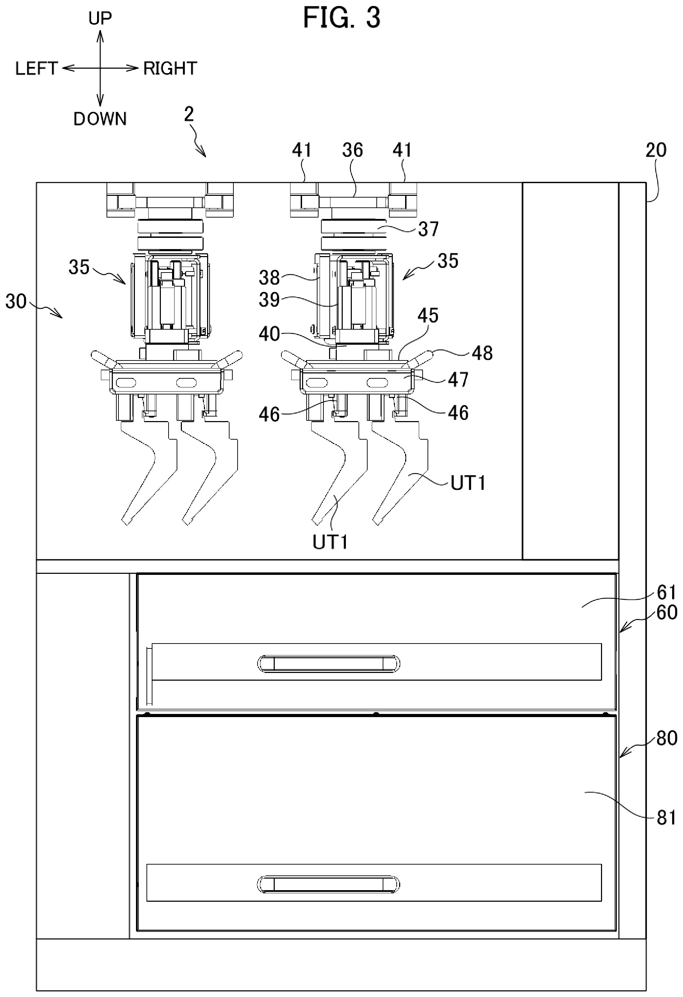

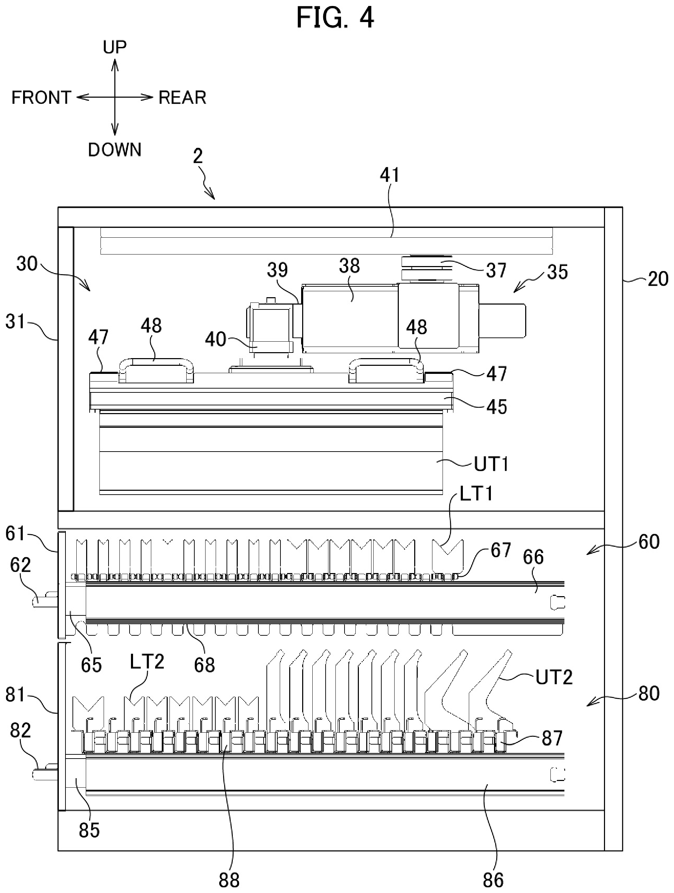

The tool storage device 2 will be described below with reference to FIGS. 2 to 4. FIG. 3 is a front view illustrating the main part of the tool storage device. FIG. 4 is a side view illustrating the main part of the tool storage device.

The tool storage device 2 stores a plurality of tools including upper tools UT1, UT2 and lower tools LT1, LT2. The tool storage device 2 is used by an operator to replace (manually replace) the tools with respect to the lower tool holder 6 and the upper tool holder 8. The tool storage device 2 is arranged on either the left or the right side, or on each side of the bending machine 1. In the example illustrated in FIG. 2, the tool storage device 2 is arranged adjacent to the right side of the bending machine 1.

The tool storage device 2 includes the rack body 20. The rack body 20 includes a frame and a panel covering circumference thereof, and has a box shape. An opening is provided on a front side of the rack body 20. The rack body 20 is provided with an upper stage storage unit 30, a middle stage storage unit 60, and a lower stage storage unit 80. In FIG. 4, the panel of the rack body 20 is omitted for convenience of explanation.

The upper stage storage unit 30 is located on an upper stage of the rack body 20. The upper stage storage unit 30 stores the long upper tools UT1 having a long dimension in a tool width direction. An opening on a front side of the upper stage storage unit 30 can be closed by an attached opening and closing door 31 that is openable and closable using a hinge mechanism. The opening and closing door 31 is omitted in FIG. 3.

The middle stage storage unit 60 is located on a middle stage of the rack body 20. The middle stage storage unit 60 stores the long lower tools LT1 having a long dimension in a tool width direction. An opening on a front side of the middle stage storage unit 60 can be closed by a middle stage door 61 attached to a front end of a middle stage tool table 65 described later.

The lower stage storage unit 80 is located on a lower stage of the rack body 20. The lower stage storage unit 80 stores short upper tools UT2 and short lower tools LT2 having a short dimension in the tool width direction. An opening on a front side of the lower stage storage unit 80 can be closed by a lower stage door 81 attached to a front end of a lower stage tool table 85 described later.

Each of the storage units 30, 60, and 80 will be described in detail below.

The upper stage storage unit 30 includes tool holding units 35 for holding the long upper tools UT1. In the upper stage storage unit 30, a plurality of the tool holding units 35 are arranged adjacent to each other in the left-right direction. In this embodiment, two tool holding units 35 are arranged. Each of the tool holding units 35 has a slide 36, an arm rotation part 37, a holding block 38, an arm 39, a stocker rotation part 40, and a stocker 45.

The slide 36 is movable in the front-rear direction. The rack body 20 is provided with a pair of upper stage slide rails 41 extending in the front-rear direction, and both left and right ends of the slide 36 are held by the pair of upper stage slide rails 41. The slide 36 moves in the front-rear direction by being guided by the upper stage slide rails 41.

The arm rotation part 37 is connected to a lower part of the slide 36 and moves integrally with the slide 36. The arm rotation part 37 is configured so as to rotate around an arm rotation axis extending in the up-down direction.

The holding block 38 is composed of a rectangular tube that extends in one direction, and is stored in the upper stage storage unit 30 in such an orientation that the longitudinal direction thereof is in the front-rear direction. A rear end side of the holding block 38 is connected to a lower end of the arm rotation part 37. The holding block 38 rotates around the arm rotation part 37 (arm rotation axis), and a front side of the holding block 38 horizontally rotates to swing left and right.

The holding block 38 with both front and rear ends open holds the arm 39 inside. A guide for guiding the movement of the arm 39 is provided in the holding block 38 in a longitudinal direction of the holding block 38. The arm 39 can advance and retract in the longitudinal direction of the holding block 38 by being guided by the holding block 38. The arm 39 is held by the holding block 38, so that it rotates horizontally in response to horizontal rotation of the holding block 38.

The stocker rotation part 40 is connected to a tip of the arm 39 and moves integrally with the arm 39. The stocker rotation part 40 is rotatable about a stocker rotation axis in the up-down direction.

The stocker 45 is composed of a box body that is elongated in one direction, and is stored in the upper stage storage unit 30 in such an orientation that the longitudinal direction thereof is in the front-rear direction. The stocker 45 is arranged at a height corresponding to the upper tool holder 8 of the bending machine 1. A central portion of an upper surface of the stocker 45 is connected to a lower end of the stocker rotation part 40. The stocker 45 rotates around the stocker rotation part 40 (stocker rotation axis), and that both ends of the stocker 45 horizontally rotates to swing left and right.

The tool holding grooves 46 for holding the long upper tools UT1 are provided on a lower surface of the stocker 45. The tool holding grooves 46 are composed of concave grooves linearly extending in the longitudinal direction of the stocker 45. The long upper tools UT1 are mounted in the tool holding grooves 46 by sliding and inserting from one or the other end side of the tool holding grooves 46 in the longitudinal direction. In this embodiment, two tool holding grooves 46 are provided in parallel on the lower surface of the stocker 45. The stocker 45 can hold a number of the long upper tools UT1 corresponding to the tool holding grooves 46. The long upper tools UT1 are held by the tool holding grooves 46 at the same height as the long upper tools UT1 attached to the upper tool holder 8 of the bending machine 1.

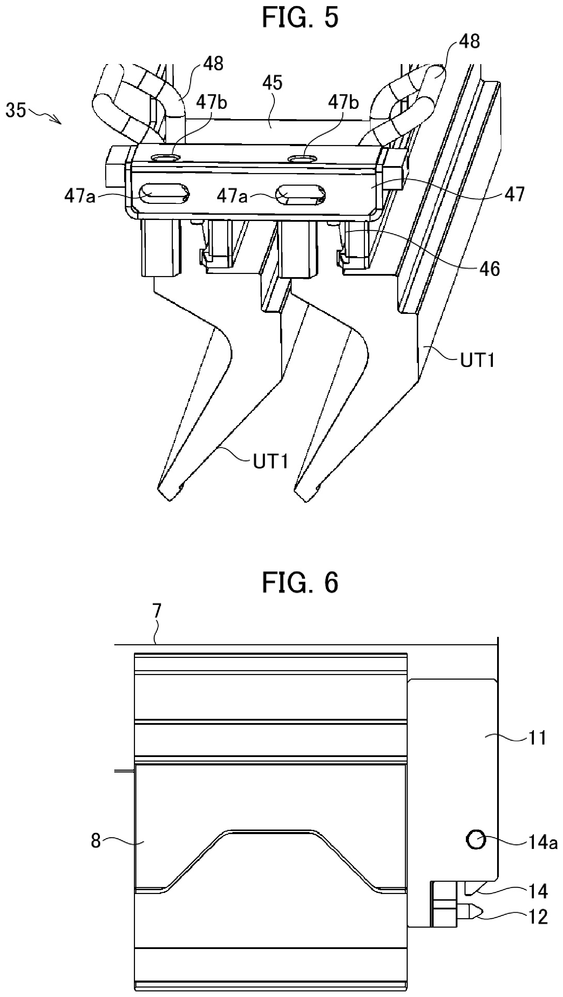

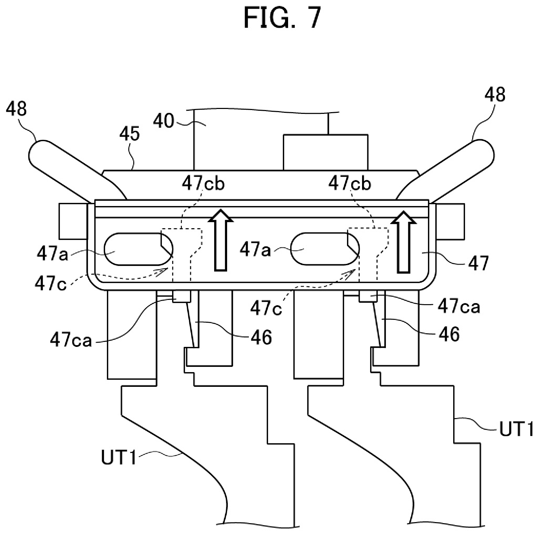

FIG. 5 is an enlarged perspective view illustrating a main portion of the stocker. FIG. 6 is a diagram for explaining a table-side fixing block provided on an upper table side of the bending machine. FIG. 7 is an enlarged side view illustrating the main portion of the stocker. As illustrated in FIG. 6, stocker-side fixation blocks 47 are provided at both ends of the stocker 45 in the longitudinal direction. On side surfaces of the stocker-side fixation blocks 47, positioning grooves 47a are provided for positioning the stocker 45 with respect to the upper tool holder 8 at the right end of the upper table 7. On the other hand, as illustrated in FIG. 7, positioning pins 12 are provided on a right end surface of the table-side fixing block 11. When the positioning pins 12 are inserted into the positioning grooves 47a, the stocker 45 is positioned with respect to the upper tool holder 8 at the right end.

When the stocker 45 is moved and horizontally rotated, there is a possibility that the long upper tools UT1 move horizontally in the tool holding grooves 46 due to inertial force or centrifugal force acting on the long upper tools UT1, and the long upper tools UT1 may fall off from ends of the tool holding grooves 46. As illustrated in FIG. 7, the stocker-side fixation blocks 47 are provided with two stoppers 47c. The stoppers 47c are provided at positions corresponding to the tool holding grooves 46. Each of the stoppers 47c is pressed downward by a pressing means such as a spring, and lower portions 47ca of the stoppers 47c protrude downward by a certain amount from a lower surface of the stocker-side fixation blocks 47. Therefore, even if the long upper tools UT1 move horizontally along the tool holding grooves 46, it is possible to prevent the long upper tools UT1 from falling off from the ends of the tool holding grooves 46 by abutting against the stoppers 47c.

A tapered surface is formed on upper portions 47cb of the stoppers 47c. When the positioning pins 12 enter the positioning grooves 47a, the tip of the positioning pins 12 abuts against the tapered surface of the upper portions 47cb. When the insertion force of the positioning pins 12 is applied, the stoppers 47c are pushed upward, and a lower end of the stoppers 47c rises above the lower surface of the stocker-side fixation blocks 47. Therefore, when the stocker 45 is positioned with respect to the upper tool holder 8 at the right end of the upper table 7, the restriction by the stoppers 47c is eliminated, so that the long upper tools UT1 can be moved from the stocker 45 to the upper tool holder 8.

As illustrated in FIG. 5, an upper surface of the stocker-side fixation blocks 47 is provided with fixing grooves 47b for fixing the stocker 45 to the upper tool holder 8 at the right end. On the other hand, as illustrated in FIG. 6, the table-side fixing block 11 is provided with fixing latches 14 that advance and retract in the up-down direction. When the stocker 45 is positioned with respect to the upper tool holder 8 at the right end, the fixing latches 14 are inserted into the fixing grooves 47b. As a result, the stocker 45 is fixed to the upper tool holder 8 at the right end. By pressing a release button 14a, the fixing latches 14 are forcibly raised, and fixation of the stocker 45 can be released.

As illustrated in FIGS. 4 and 5, upper handles 48 are provided on an upper surface of the stocker 45 for an operator to hold. By using the upper handles 48, the operator can perform horizontal rotation of the stocker 45, advancing and retracting movement of the arm 39, horizontal rotation of the arm 39 and the holding block 38, and forward and backward movement of the slide 36.

The middle stage storage unit 60 includes the middle stage tool table 65 for holding the long lower tools LT1. The middle stage door 61 is provided on a front end of the middle stage tool table 65, and a middle stage handle 62 is provided on a front surface of the middle stage door 61. The middle stage tool table 65 is arranged at a height corresponding to the lower tool holder 6 of the bending machine 1.

The middle stage tool table 65 is movable in the front-rear direction. The rack body 20 is provided with a pair of middle stage slide rails 66 extending in the front-rear direction, and both left and right ends of the middle stage tool table 65 are held by the pair of middle stage slide rails 66. The middle stage tool table 65 moves in the front-rear direction by being guided by the middle stage slide rails 66. The operator can pull out the middle stage tool table 65 from the middle stage storage unit 60 or store the middle stage tool table 65 that is pulled out in the middle stage storage unit 60 by using the middle stage handle 62.

A plurality of lower tool holding portions 67 is arranged on an upper surface of the middle stage tool table 65 for holding the long lower tools LT1. The plurality of lower tool holding portions 67 are arranged at equal distances in the front-rear direction. Each of the lower tool holding portions 67 has a fixed length in the left-right direction, and can hold one of the long lower tools LT1. The long lower tools LT1 are held by the lower tool holding portions 67 at the same height as the long lower tool LT1 attached to the lower tool holder 6 of the bending machine 1.

A plurality of lock grooves 68 for regulating the movement of the middle stage tool table 65 in the front-rear direction are provided on left and right side surfaces of the middle stage tool table. The plurality of lock grooves 68 is provided corresponding to the plurality of lower tool holding portions 67.

The lower stage storage unit 80 includes a lower stage tool table 85 for holding the short upper tools UT2 and the short lower tools LT2. A lower stage door 81 is provided on a front end of the lower stage tool table 85, and a lower handle 82 is provided on a front face of the lower stage door 81.

The lower stage tool table 85 is movable in the front-rear direction. The rack body 20 is provided with a pair of lower slide rails 86 extending in the front-rear direction, and both left and right ends of the lower stage tool table 85 are held by the pair of lower slide rails 86. The lower stage tool table 85 moves in the front-rear direction by being guided by the pair of lower slide rails 86. The operator can pull out the lower stage tool table 85 from the lower stage storage unit 80 and store the lower stage tool table 85 that is pulled out in the lower stage storage unit 80 by using the lower handle 82.

A plurality of upper tool holding portions 87 for holding the short upper tools UT2, and a plurality of lower tool holding portions 88 for holding the short lower tools LT2 are arranged on an upper surface of the lower stage tool table 85. The plurality of upper tool holding portions 87 are arranged at equal distances in the front-rear direction. The upper tool holding portions 87 have a fixed length in the left-right direction and can hold two or more short upper tools UT2 side by side. The plurality of lower tool holding portions 88 are arranged at equal distances in the front-rear direction. The lower tool holding portions 88 have a fixed length in the left-right direction and can hold two or more short lower tools LT2 side by side.

Next, replacement operation of the tools using the tool storage device 2 will be described. Since the replacement operation of the tools differs among the upper stage storage unit 30, the middle stage storage unit 60, and the lower stage storage unit 80, the replacement operation of the tool will be described for each of the storage units.

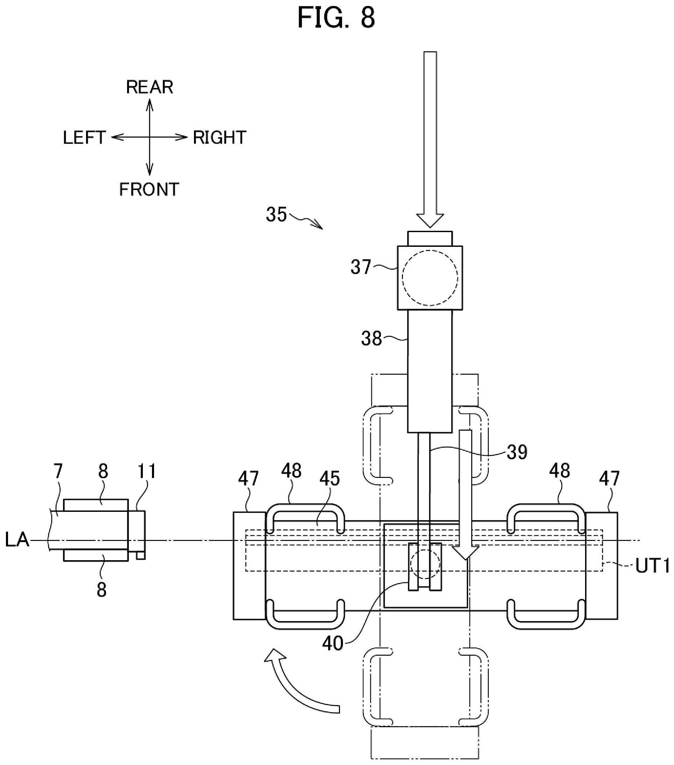

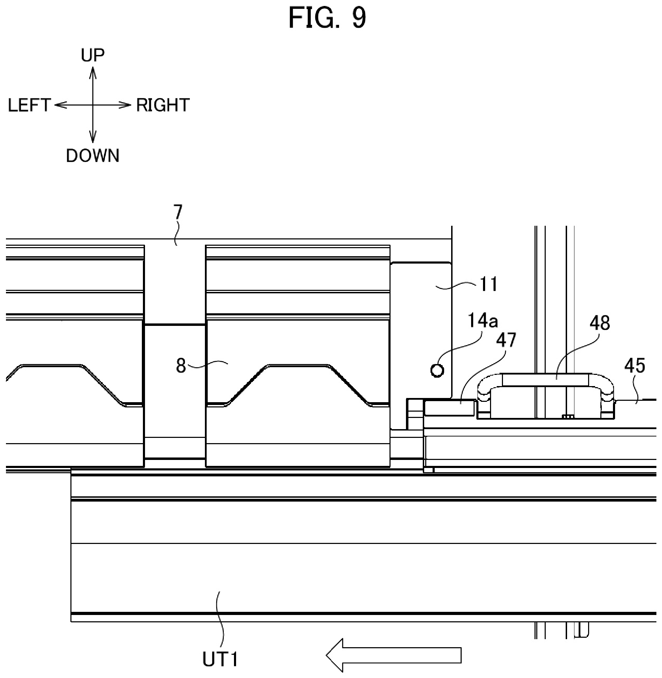

First, the replacement operation of the long upper tools UT1 using the upper stage storage unit 30 will be described with reference to FIGS. 1 to 4, and FIGS. 8 and 9. In the following description, a situation in which the long upper tools UT1 stored in the upper stage storage unit 30 are attached to the upper tool holder 8 of the upper table 7 will be exemplified. Here, FIG. 8 is a diagram for explaining replacement operation of the long upper tools using the upper stage storage unit. FIG. 9 is a diagram for explaining the operation of attaching the long upper tools of the stocker to an upper tool holder.

First, as illustrated in FIGS. 3 and 4, the holding block 38 and the stocker 45 are in an orientation in which the longitudinal direction is the front-rear direction, and the arm 39 is in the most retracted position. In this case, the stocker 45 is stored in the rack body 20 in an orientation in which the tool holding grooves 46 are in the front-rear direction, and the long upper tools UT1 held by the stocker 45 is also stored in the upper stage storage unit 30 (first state).

The operator pulls the stocker 45 forward. When the slide 36 moves forward and the arm 39 advances forward, the stocker 45 can be pulled out from the inside of the upper stage storage unit 30.

As illustrated in FIG. 8, the operator rotates the stocker 45 leftward or rightward. When the stocker 45 rotates around the stocker rotation part 40, the stocker 45 rotates horizontally. The operator rotates the stocker 45 by about 90 degrees and changes the orientation of the stocker 45 in the longitudinal direction of the stocker 45, that is, so that the long upper tools UT1 are parallel to the upper tool holder 8. As a result, the stocker 45 is arranged on a side of the upper tool holder 8 at the right end and at a position aligned in the left-right direction. As a result, the tool holding grooves 46 of the stocker 45 are aligned in the left-right direction along the holder groove of the upper tool holder 8, and the long upper tools UT1 can be arranged in parallel on an extension line LA of the holder groove of the upper tool holder 8 (second state).

The operator can select whether the stocker 45 is rotated leftward or rightward. Thus, when the stocker 45 is rotated 90 degrees, the operator can select whether a front surface of the long upper tools UT1 faces the operator or a back surface of the long upper tools UT1 faces the operator. The operator can select whether the long upper tools UT1 are attached in a face-up manner or face-down manner with respect to the upper tool holder 8.

Next, as illustrated in FIG. 1, the operator moves the stocker 45 leftward until the stocker-side fixation blocks 47 abut the table-side fixing block 11. At this point, the holding block 38 rotates horizontally and the arm 39 and the holding block 38 swing leftward, whereby the stocker 45 can be linearly moved leftward. Further, the stocker 45 rotates horizontally with respect to the arm 39, and the arm 39 and the slide 36 move forward, so that the stocker 45 can be linearly moved in a smooth manner.

At this point, the operator pushes the stocker-side fixation blocks 47 against the table-side fixing block 11 so that the positioning pins 12 (see FIG. 6) are inserted into the positioning grooves 47a (see FIG. 5). Thus, as illustrated in FIG. 9, the stocker 45 is properly positioned with respect to the upper tool holder 8 at the right end. When the fixing latches 14 (see FIG. 6) are inserted into the fixing grooves 47b (see FIG. 5), the stocker 45 is fixed to a side of the upper tool holder 8 at the right end. When the positioning pins 12 are inserted into the positioning grooves 47a, the stoppers 47c are pushed upward. As a result, restrictions due to the stoppers 47c are eliminated, and the long upper tools UT1 can be transferred.

As illustrated in FIG. 9, when the stocker 45 is positioned on the side of the upper tool holder 8 at the right end, the holder groove of the upper tool holder 8 and the tool holding grooves 46 of the stocker 45 are aligned in the left-right direction. By moving the long upper tool UT1 of the stocker 45 leftward, the operator can transfer the long upper tool UT1 from the stocker 45 to the upper tool holder 8. By sliding the long upper tools UT1 along the holder groove of the upper tool holder 8, the operator can arrange the long upper tools UT1 at a desired position on the upper table 7.

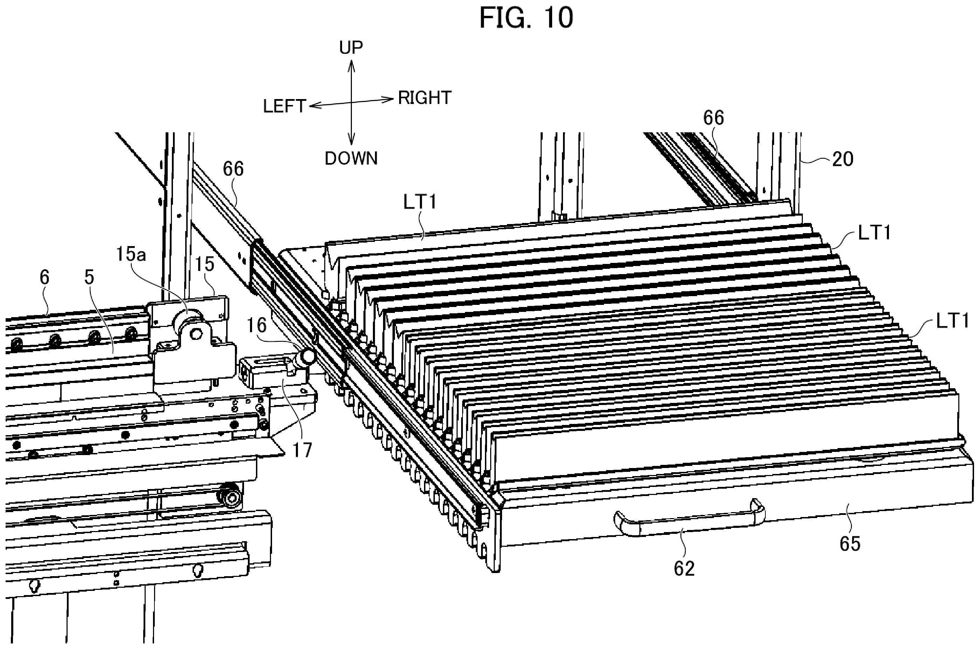

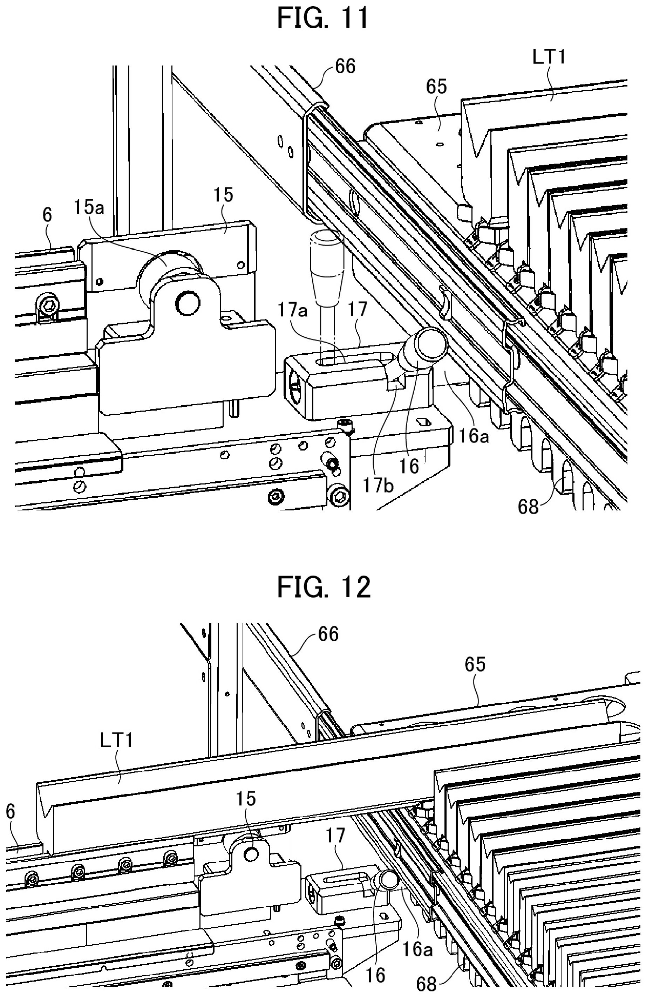

Next, referring to FIGS. 1 to 4, and FIGS. 10 to 12, the replacement operation of the long lower tools LT1 using the middle stage storage unit 60 will be described. In the following description, a situation in which the long lower tools LT1 stored in the middle stage storage unit 60 are attached to the lower tool holder 6 of the lower table 5 will be exemplified. Here, FIG. 10 is a diagram for explaining a replacement operation of long lower tools using the middle stage storage unit. FIG. 11 is a diagram for explaining a connecting portion and a lock lever included in the bending machine. FIG. 12 is a diagram for explaining an operation of attaching long lower tools of an intermediate tool table to a lower holder.

First, as illustrated in FIGS. 3 and 4, the middle stage tool table 65 is stored in the middle stage storage unit 60.

The operator pulls the middle stage tool table 65 forward. The middle stage tool table 65 is guided by the pair of middle stage slide rails 66, and is pulled forward from the inside of the middle stage storage unit 60.

As illustrated in FIG. 10, the operator stops the middle stage tool table 65 when the long lower tool LT1 to be mounted to the lower table 5, from among the plurality of the long lower tools LT1 attached to the middle stage tool table 65 reaches a right side of the lower table 5. The operator fixes the middle stage tool table 65 using the lock lever 16 provided at the right end of the lower table 5.

As illustrated in FIG. 11, the lock lever 16 can be operated along a guide groove 17a formed in the lever support member 17. The lock lever 16 can be moved in the left-right direction in an upright state. A cylindrical rod 16a extending in the left-right direction is connected to a lower end of the lock lever 16. When the lock lever 16 moves to a right end of the guide groove 17a, the lock lever 16 reaches a lock position. When the lock lever 16 is in the lock position, a right end of the rod 16a enters one of the lock grooves 68 provided on the side surface of the middle stage tool table 65. Thus, movement in the front-rear direction with respect to the middle stage tool table 65 is restricted, and the middle stage tool table 65 can be fixed.

When the lock lever 16 is in the lock position, the lock lever 16 enters the lock groove 17b by tilting the lock lever 16 forward. Thus, the movement of the lock lever 16 and the rod 16a in the left-right direction is locked, and consequently, the movement of the middle stage tool table 65 in the front-rear direction can be locked.

On the other hand, by returning the lock lever 16 from a tilted state to an upright state, the lock lever 16 can move in the left-right direction along the guide groove 17a. When the lock lever 16 is located at a left end of the guide groove 17a, the right end of the rod 16a is pulled out from the lock groove 68 of the middle stage tool table 65. Thus, the middle stage tool table 65 can be moved in the front-back direction.

As described above, when the middle stage tool table 65 is fixed by the lock lever 16, as illustrated in FIG. 12, the operator slides the long lower tool LT1 leftward. Thus, the operator can move the long lower tool LT1 from the middle stage tool table 65 to the lower tool holder 6. By sliding the long lower tool LT1 along the holder groove of the lower tool holder 6, the operator can arrange the long lower tool LT1 at a desired position of the lower table 5.

As illustrated in FIG. 11, the connecting unit 15 for guiding the movement of the long lower tools LT1 is provided on a right side of the lower tool holder 6. The connecting unit 15 includes a driven roller 15a rotatable around a rotation axis in the left-right direction.

As illustrated in FIG. 12, when the operator slides the long lower tool LT1 leftward, the long lower tool LT1 reaches the lower tool holder 6 via the driven roller 15a of the connecting unit 15. Therefore, even if the middle stage tool table 65 and the lower tool holder 6 are separated from each other in the left-right direction, the long lower tool LT1 can be transferred from the middle stage tool table 65 to the lower tool holder 6 via the connecting unit 15 in a smooth manner. Moreover, even if there is a gap in a height in the up-down direction between the lower tool holder 6 and the middle stage tool table 65, a transfer height of the long lower tool LT1 can be adjusted via the connecting unit 15. Thus, the long lower tool LT1 can be transferred from the middle stage tool table 65 to the lower tool holder 6 in a smooth manner without colliding with the lower tool holder 6.

When the lock lever 16 is in the upright state, as illustrated by the dashed line in FIG. 11, the lock lever 16 is positioned on a transfer path of the long lower tool LT1 from the middle stage tool table 65 to the lower tool holder 6. Therefore, when the long lower tool LT1 slides leftward from the middle stage tool table 65, it interferes with the lock lever 16 and the long lower tool LT1 cannot reach the lower tool holder 6. Therefore, the long lower tool LT1 can be transferred to the lower tool holder 6 only when the middle stage tool table 65 is securely locked by moving the lock lever 16 into the lock groove 17b.

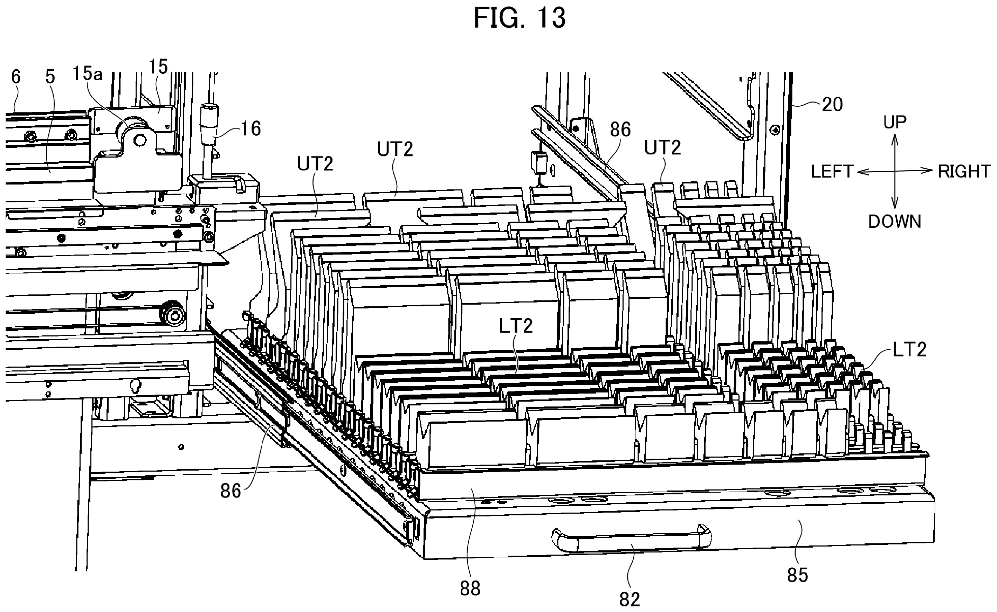

Finally, the replacement operation of the short upper tools UT2 and the short lower tools LT2 using the lower stage storage unit 80 will be described with reference to FIGS. 1 to 4, and 13. The following description illustrates a situation in which the short upper tools UT2 stored in the lower stage storage unit 80 are attached to the upper tool holder 8 of the upper table 7, and the short lower tools LT2 are attached to the lower tool holder 6 of the lower table 5. Here, FIG. 13 is a diagram for explaining the replacement operation of the short upper tools and the short lower tools using the lower storage portion.

First, as illustrated in FIGS. 3 and 4, the lower stage tool table 85 is stored in the lower stage storage unit 80.

The operator pulls the lower stage tool table 85 forward. The lower stage tool table 85 is guided by the pair of the lower slide rails 86, and is pulled forward from the inside of the lower stage storage unit 80.

As illustrated in FIG. 13, when the lower stage tool table 85 is pulled out, the operator takes out the short upper tool UT2 to be attached on the upper table 7 from among the plurality of short upper tools UT2 mounted on the lower stage tool table 85. The operator then attaches the short upper tool UT2 that is taken out to the upper tool holder 8 of the upper table 7. Similarly, the operator takes out the short lower tool LT2 to be attached on the lower table 5 from among the plurality of short lower tools LT2 mounted on the lower stage tool table 85. The operator then attaches the short lower tool LT2 that is taken out to the lower tool holder 6 of the lower table 5. By the above operation, required tools are arranged in the tool holders 6 and 8 of the tables 5 and 7.

In the above description, situations in which tools are attached from the storage units 30, 60 and 80 have been described. Naturally, the present embodiment can be applied even when tools are returned from the tables 5 and 7 to the storage units 30, 60 and 80. When the tools are stored, the above-described attaching operation is performed in a reverse order.

As described above, in the tool storage device 2 according to the present embodiment, by utilizing the advancing and retracting operation of the advancing and retracting mechanism and the rotation of the stocker rotation part 40, the forward and backward movement of the stocker 45 and the horizontal rotation of the stocker 45 can be performed. By advancing the stocker 45 stored in the rack body 20 in the front-back direction and changing the orientation of the stocker 45 to be in the lateral direction, the operator can place the stocker 45 close to the side of the upper tool holder 8. The tool holding grooves 46 of the stocker 45 can be aligned in the left-right direction along the holder groove of the upper tool holder 8, the long upper tools UT1 can be arranged in parallel on the extension line LA of the holder groove of the upper tool holder 8. Therefore, the long upper tools UT1 held by the stocker 45 can be arranged on the upper tool holder 8 by only sliding the long upper tools UT1 in the left-right direction.

Thus, the operator can perform the forward and backward movement of the stocker 45 and the horizontal rotation of the stocker 45 in a series of operations, so that the long upper tools UT1 held by the stocker 45 can be transferred to the upper tool holder 8 in a smooth manner. Thus, the work efficiency can be improved when the long upper tools UT1 are attached to the upper tool holder 8 of the upper table 7 of the bending machine 1.

In the present embodiment, the tool holding units 35 further include the arm rotation part 37 for horizontally rotating the advancing and retracting mechanism around the arm rotation axis in the up-down direction.

According to this configuration, not only the stocker 45, but also the advancing and retracting mechanism can be horizontally rotated. By horizontally rotating the advancing and retracting mechanism, the stocker 45 can be moved in the left-right direction. Even when the upper tool holder 8 and the tool holding units 35 are separated from each other in the left-right direction, the stocker 45 can be placed to a position laterally close to the upper tool holder 8.

In this embodiment, the advancing and retracting mechanism includes the slide 36 that moves in the front-rear direction guided by the upper stage slide rails 41 fixed to the rack body 20, the holding block 38 connected to the slide 36 through the arm rotation part 37, and the arm 39 that moves in the longitudinal direction of the holding block 38 guided by the holding block 38.

According to this configuration, the stocker 45 can be moved in the front-rear direction by using the movement of the slide 36 in the front-rear direction, and the movement of the arm 39 in the front-rear direction. The holding block 38 can be horizontally rotated by the arm rotation part 37, and whereby the holding block 38 and the arm 39 can be swung in the left-right direction. Thus, the stocker 45 can be swung in the left-right direction. Even when the upper tool holder 8 and the tool holding units 35 are separated from each other in the left-right direction, the stocker 45 can be laterally placed at a position close to the upper tool holder 8.

In the present embodiment, the plurality of the tool holding grooves 46 are arranged in parallel in the stocker 45.

According to this configuration, one stocker 45 can hold a plurality of the long upper tools UT1, the plurality of the long upper tools UT1 can be efficiently stored. In addition, by positioning the stocker 45 in the front-rear direction, the long upper tool UT1 to be aligned on the side of the upper tool holder 8 can be selected from the plurality of the long upper tools UT1. In addition, the orientation of the plurality of the long upper tools UT1 can be changed at once, so that work efficiency can be improved as compared with a case in which the orientation of the plurality of the long upper tools UT1 are individually changed.

In the rack body 20 of this embodiment, the tool holding unit 35 on a left side adjacent to the bending machine 1, and the tool holding unit 35 on a right side adjacent thereto, are arranged so as to be adjacent to each other in the left-right direction.

When the stocker 45 is stored in the rack body 20, the stocker 45 can have an orientation in the front-rear direction. Thus, a plurality of the stockers 45 can be stored in the rack body 20 without a large space in the left-right direction.

In the present embodiment, the tool storage device 2 further includes the middle stage tool table 65 that can be pulled out in the front-rear direction. The plurality of the long lower tools LT1 attached to the lower tool holder 6 of the lower table 5 of the bending machine 1 are mounted on the middle stage tool table 65 in the front-rear direction. The lock lever 16 of the bending machine 1 advances to a lock position in the left-right direction and enters one of the lock grooves 68 of the middle stage tool table 65, so that the movement of the middle stage tool table 65 in the front-rear direction is restricted.

According to this configuration, movement of the middle stage tool table 65 in the front-rear direction can be restricted by the lock lever 16. Thus, the lower tool holder 6 of the lower table 5 and the long lower tool LT1 held on the middle stage tool table 65 can be properly positioned and fixed.

The lock lever 16 is arranged between the lower table 5 and the middle stage tool table 65. The lock lever 16 moves in the left-right direction in a state of standing in the up-down direction, and reaches the lock position, so that it can be switched to a tilted state in the front-rear direction.

When the lock lever 16 is in the standing state, the lock lever 16 exists on the moving path of the long lower tool LT1. Therefore, the long lower tool LT1 interferes with the lock lever 16, and the long lower tool LT1 cannot be transferred from the middle stage tool table 65 to the lower tool holder 6. On the other hand, when the lock lever 16 reaches the lock position, the lock lever 16 can be tilted. Thus, the lock lever 16 can be retracted from the moving path of the long lower tool LT1. Thus, interference with the lock lever 16 is avoided, and the long lower tool LT1 can be transferred from the middle stage tool table 65 to the lower tool holder 6. In this way, the long lower tool LT1 cannot be transferred unless the middle stage tool table 65 is locked by the lock lever 16. As a result, the transfer of the long lower tool LT1 can be permitted only when the middle stage tool table 65 is locked by the lock lever 16.

### (Second Embodiment)

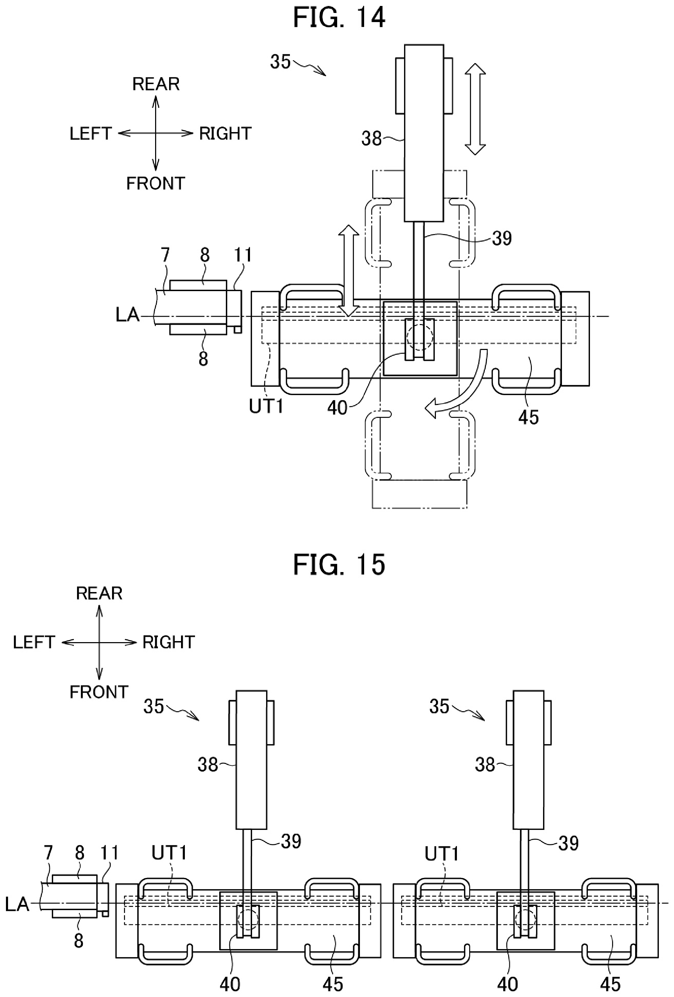

Hereinafter, with reference to FIGS. 14 and 15, the tool storage device 2 according to a second embodiment will be described. FIG. 14 is a diagram for explaining a main part of the tool storage device according to the second embodiment. FIG. 15 is a diagram for explaining a main part of the tool storage device according to the second embodiment.

The tool holding units 35 according to the first embodiment include the arm rotation part 37 and the stocker rotation part 40, and are horizontally rotatable around two axes. However, the tool holding units 35 may be horizontally rotatable around one axis of the stocker rotation part 40.

As illustrated in FIG. 14, the tool holding units 35 according to the second embodiment include the slide 36, the holding block 38, the arm 39, the stocker rotation part 40, and the stocker 45. That is, the tool holding units 35 according to the second embodiment do not include the arm rotation part 37, and the holding block 38 is connected to the slide 36.

According to this configuration, when the slide 36 moves forward and the arm 39 advances forward, the stocker 45 is pulled forward from the inside of the upper stage storage unit 30. By rotating the stocker 45 by about 90 degrees, the operator changes the orientation of the stocker 45 in the longitudinal direction of the stocker 45, that is, so that the long upper tool UT1 is parallel to the upper tool holder 8. As a result, the stocker 45 is arranged on a side of the upper tool holder 8 at a position aligned in the left-right direction. In this case, the long upper tool UT1 can be arranged in parallel with the extension line LA of the holder groove of the upper tool holder 8.

As described above, the tool storage device 2 according to this embodiment can perform the forward and backward movement of the stocker 45 and the horizontal rotation of the stocker 45 by utilizing the advancing and retracting operation of the advancing and retracting mechanism and the rotation of the stocker rotation part 40. The operator advances the stocker 45 stored in the rack body 20 in the front-back direction and changes the orientation of the stocker 45 so as to be aligned in the left-right direction, whereby the stocker 45 can be placed close to the side of the upper tool holder 8. The tool holding grooves 46 of the stocker 45 can be aligned in the left-right direction along the holder groove of the upper tool holder 8, the long upper tool UT1 can be arranged in parallel with the extension line LA of the holder groove of the upper tool holder 8. Therefore, the long upper tool UT1 held by the stocker 45 can be arranged on the upper tool holder 8 by only sliding the long upper tool UT1 in the left-right direction.

Thus, the operator can perform the forward and backward movement of the stocker 45 and the horizontal rotation of the stocker 45 in a series of operations, the long upper tool UT1 held by the stocker 45 can be transferred to the upper tool holder 8 in a smooth manner. In this way, work efficiency can be improved when the long upper tool UT1 is attached to the upper tool holder 8 of the upper table 7 of the bending machine 1.

As illustrated in FIG. 15, in the tool holding unit 35 on a left side adjacent to the bending machine 1, the stocker 45 can be positioned to the side of the upper tool holder 8 at the right end by rotating the stocker 45. On the other hand, the tool holding unit 35 at the right end is located away from the bending machine 1, since there is a distance between the stocker 45 and the upper tool holder 8 at the right end even if the stocker 45 is rotated. Therefore, when the long upper tools UT1 are transferred from the stocker 45 of the tool holding unit 35 on the right side, a path for transferring tools to the upper table 7 may be formed by passing the tool holding grooves 46 of the stocker 45 of the tool holding unit 35 on the left side.

As described above, in this embodiment, the long lower tool LT1 held by the tool holding unit 35 at the right side is transferred to the upper tool holder 8 of the upper table 7 via the tool holding grooves 46 of the stocker 45 of the tool holding unit 35 at the left side.

According to this configuration, the adjacent stockers can be arranged side by side on the right and left sides of the tool holder. Thus, by allowing the adjacent stockers cooperate, the tools of the stockers located far from the bending machine can be transferred to the tool holder.

Each of the above-described embodiments not only discloses the tool storage device 2 but also discloses a bending system including the bending machine 1 and the tool storage device 2. According to this bending system, it is possible to improve the working efficiency when the long upper tools UT1 are attached to the upper tool holder 8 of the upper table 7 of the bending machine 1.

In the above-described first and second embodiments, the stocker 45 may not only hold the long upper tools UT1 but also the short upper tools UT2. Similarly, the middle stage tool table 65 may not only hold the long lower tools LT1 but also the short lower tools LT2.

### (Third Embodiment)

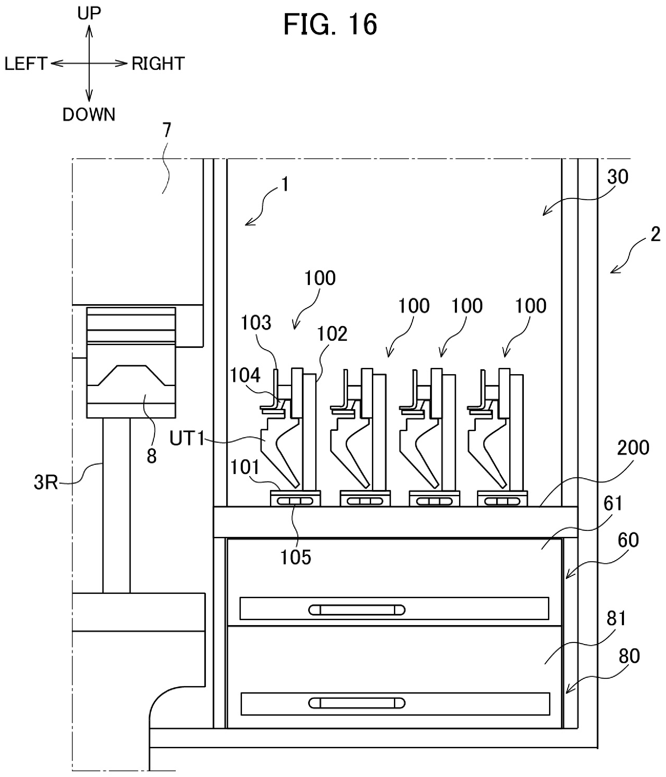

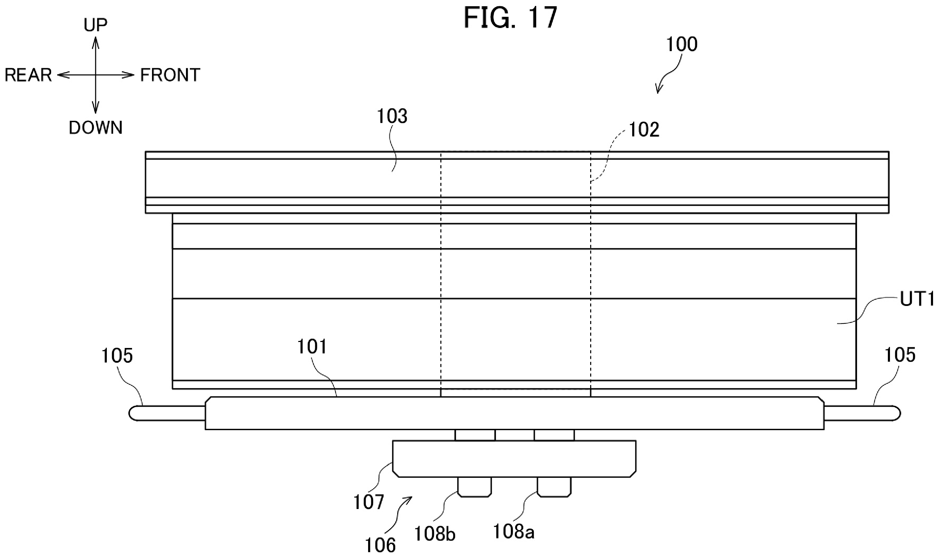

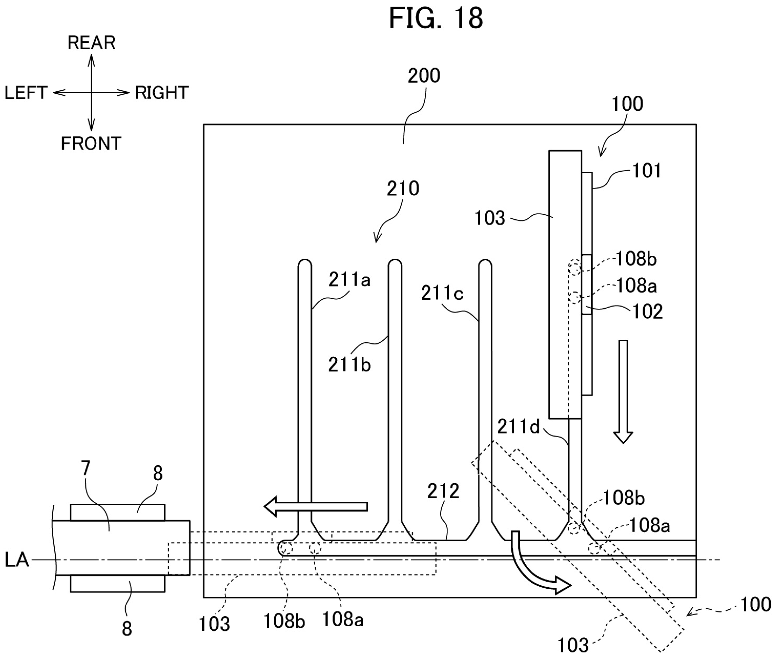

Hereinafter, with reference to FIGS. 16 to 18, the tool storage device 2 according to a third embodiment will be described. FIG. 16 is a diagram for explaining a main part of the tool storage device according to a third embodiment. FIG. 17 is a diagram for explaining a configuration of a tool holding unit. FIG. 18 is a top view for explaining a guide table and the stocker moving on the guide table.

As in the first embodiment, the tool storage device 2 according to the third embodiment includes the upper stage storage unit 30, the middle stage storage unit 60, and the lower stage storage unit 80. The third embodiment differs from the first embodiment in the structure of the tool holding units 100 in the upper stage storage unit 30. Hereinafter, description will be made focusing on the differences.

In the upper stage storage unit 30, a plurality of tool holding units 100, and in this embodiment, four tool holding units 100, are arranged adjacent to each other in the left-right direction. Each of the tool holding units 100 is arranged on a guide table 200 described later. The tool holding units 100 have a stocker 103 and a stocker moving unit 106.

The stocker 103 includes a stocker base 101 and a support column 102, and is supported by the stocker base 101 and the support column 102 at a position having a predetermined height from the guide table 200.

The stocker base 101 is composed of a box that is elongated in one direction, and is open on a lower surface side. The stocker base 101 is stored in the upper stage storage unit 30 in such an orientation that the longitudinal direction thereof is in the front-rear direction. Upper stage handles 105 are provided at both ends of the stocker base 101 in the longitudinal direction for an operator to hold.

The support column 102 is arranged at a central position in the longitudinal direction of the stocker base 101, and stands at a right angle to the stocker base 101. The stocker 103 is fixed to an upper part of the support column 102, and the support column 102 supports the stocker 103 at a predetermined height.

The stocker 103 is a structure elongated in one direction, and is stored in the upper stage storage unit 30 in such an orientation that the longitudinal direction thereof is in the front-rear direction. The stocker 103 is arranged at a height corresponding to the upper tool holder 8 of the bending machine 1. The stocker 103 is provided with a tool holding groove 104 at a lower surface for holding the long upper tools UT1. The tool holding groove 104 is formed of a recessed groove linearly extending in the longitudinal direction of the stocker 103. The long upper tools UT1 are mounted in the tool holding groove 104 by sliding and inserting in the longitudinal direction from one or the other end side of the tool holding groove 104. In this embodiment, one tool holding groove 104 is provided in the lower surface of the stocker 103. The tool holding groove 104 holds the long upper tools UT1 at the same height as the long upper tools UT1 attached to the upper tool holder 8 of the bending machine 1.

The stocker moving unit 106 is attached to the lower surface of the stocker base 101. The stocker moving unit 106 horizontally rotates the stocker 103, moves it forward and backward, moves it left and right, and is provided with a pair of guide pins 108a and 108b.

The pair of guide pins 108a and 108b are arranged at a distance in the extending direction of the tool holding groove 104. With the tool holding units 100 stored in the upper stage storage unit 30, the guide pin 108a is positioned on a front side, and the guide pin 108b is positioned on a rear side. A guide plate 107 which is arranged to face the stocker base 101 is attached to the pair of guide pins 108a and 108b.

The guide plate 107 is formed of a box body which is elongated in one direction, and is opened at an upper surface side. Attachment of the guide plate 107 is made in such a state that the longitudinal direction thereof is in the longitudinal direction of the stocker base 101.

As illustrated in FIG. 18, a plurality of guide grooves 210 are provided on an upper surface of the guide table 200. The plurality of guide grooves 210 include four longitudinal guide grooves 211a to 211d extending in the front-rear direction and a lateral guide groove 212 extending in the left-right direction. The four longitudinal guide grooves 211a to 211d are provided corresponding to the four tool holding units 100. Through cooperation with the pair of guide pins 108a and 108b, the longitudinal guide grooves 211a to 211d function as guides for regulating the orientation of the stocker 103 stored in the upper stage storage unit 30 in the front-rear direction and for moving the stocker 103 in the front-rear direction. Through cooperation with the pair of guide pins 108a and 108b, the lateral guide groove 212 functions as a guide for moving the stocker 103 in the left-right direction and for horizontally rotating the stocker 103. The lateral guide groove 212 is arranged on a front side of the guide table 200, specifically outside the rack body 20, and front ends of the four longitudinal guide grooves 211a to 211d are connected to the lateral guide groove 212. The connecting portions between the longitudinal guide grooves 211a to 211d and the lateral guide groove 212 are chamfered so that the stocker 103 can horizontally rotate in a smooth manner.

The stocker base 101 of the tool holding units 100 is positioned on a front surface of the guide table 200, and the guide plate 107 is positioned on a back surface of the guide table 200. The stocker base 101 and the guide plate 107 are respectively arranged above and below the guide table 200, the support column 102 stands stably, whereby the stocker 103 can also be maintained in a horizontal state. The pair of guide pins 108a and 108b are inserted into the guide grooves 210. As a result, the pair of guide pins 108a and 108b spaced apart from each other move along the guide grooves 210 to move the stocker 103 in the front-rear direction or in the left-right direction. The pair of guide pins 108a and 108b move from the longitudinal guide grooves 211a to 211d, pass through the connecting portions between the longitudinal guide grooves 211a to 211d and the lateral guide groove 212, and enter the lateral guide groove 212, thereby horizontally rotating the stocker 103.

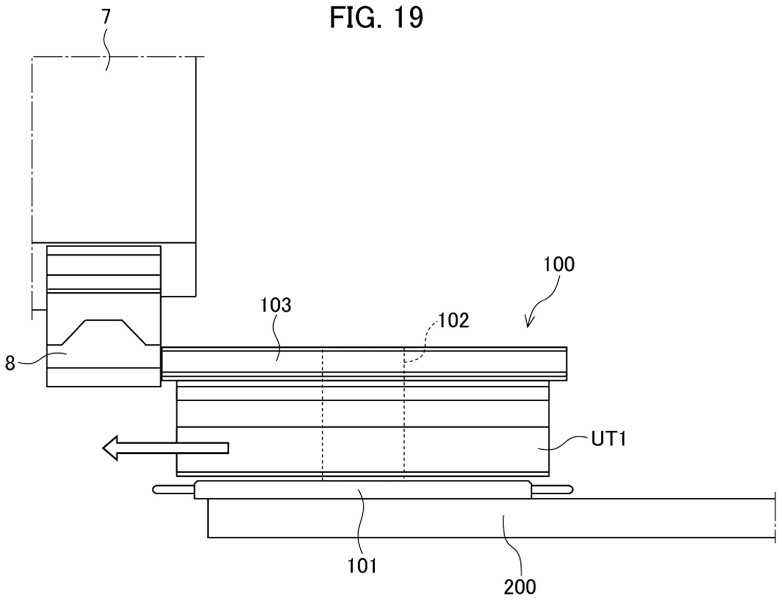

Next, with reference to FIGS. 16 to 19, the replacement operation of the long upper tools UT1 using the upper stage storage unit 30 will be described. The following description illustrates a situation in which the long upper tool UT1 stored in the upper stage storage unit 30 and located on the rightmost side is attached to the upper tool holder 8 of the upper table 7. Here, FIG. 19 is a diagram for explaining operation of transferring a long upper tool of the stocker to the upper tool holder.

First, as illustrated in FIGS. 16 to 18, the pair of guide pins 108a and 108b are arranged in the front-rear direction and are located at a rearmost position of the longitudinal guide groove 211d. The stocker 103 is stored in the upper stage storage unit 30 in such an orientation that the tool holding groove 104 extends in the front-rear direction, and the long upper tool UT1 held by the stocker 103 is also stored in the upper stage storage unit 30 (first state).

As illustrated in FIG. 18, the operator pulls the stocker 103 forward. The pair of guide pins 108a and 108b are guided by the longitudinal guide groove 211d, the stocker 103 moves forward in such an orientation that the longitudinal direction thereof remains in the front-rear direction. The operator can pull the stocker 103 forward until the guide pin 108a on a front side reaches the lateral guide groove 212.

When the guide pin 108a on the front side reaches the lateral guide groove 212, the operator moves a front end of the stocker 103 rightward while pulling the stocker 103 forward. The guide pin 108a on the front side moves rightward in the lateral guide groove 212. At this point, the guide pin 108b on the rear side moves forward along the longitudinal guide groove 211d, and after reaching the lateral guide groove 212, moves rightward along the lateral guide groove 212. Linked with the movement of the pair of guide pins 108a and 108b, the stocker 103 rotates horizontally at the connection point between the longitudinal guide groove 211d and the lateral guide groove 212. As a result, the orientation of the stocker 103 changes to a state in which it is rotated by about 90 degrees. The stocker 103 is arranged side by side with the upper tool holder 8 of the upper table 7.

When the pair of guide pins 108a and 108b enter the lateral guide groove 212, the pair of guide pins 108a and 108b are aligned in the left-right direction, so that the stocker 103 and the tool holding groove 104 are also aligned in the left-right direction. The lateral guide groove 212 is precisely formed at a predetermined position on the guide table 200, so that the tool holding groove 104 of the stocker 103 is positioned on the extension line LA of the holder groove of the upper tool holder 8 when the stocker 103 is aligned in the left-right direction by the pair of guide pins 108a and 108b. Thus, the long upper tool UT1 can be arranged side by side on the extension line LA of the holder groove of the upper tool holder 8 (second state).

Next, as illustrated in FIGS. 18 and 19, the operator moves the stocker 103 leftward until a left end of the stocker 103 abuts against the upper tool holder 8. At this point, the pair of guide pins 108a and 108b moves leftward along the lateral guide groove 212, so that the stocker 103 can be linearly moved in a smooth manner.

As illustrated in FIG. 19, when the stocker 103 reaches the side of the upper tool holder 8 at the right end, the holder groove of the upper tool holder 8 and the tool holding groove 104 of the stocker 103 are located in a continuous way in the left-right direction. By moving the long upper tool UT1 of the stocker 103 leftward, the operator can transfer the long upper tool UT1 from the stocker 103 to the upper tool holder 8. By sliding the long upper tool UT1 along the holder groove of the upper tool holder 8, the operator can arrange the long upper tool UT1 at a desired position on the upper table 7.

As described above, according to the present embodiment, the stocker moving unit 106 includes the pair of the guide pins 108a and 108b attached to the stocker 103 at a distance in an extending direction of the tool holding groove 104, and inserted into the guide grooves 210 formed in the guide table 200 to guide the movement of the stocker 103. The guide grooves 210 of the guide table 200 include the longitudinal guide grooves 211a to 211d which extend forward from the inside of the rack body to the outside of the rack body, and the lateral guide groove 212 which extends in the left-right direction and to which the front ends of longitudinal guide grooves 211a to 211d are connected. The pair of guide pins 108a and 108b horizontally rotate the stocker 103 by passing from the longitudinal guide grooves 211a to 211d, through the connecting portion between the longitudinal guide grooves 211a to 211d, and the lateral guide groove 212, reaching the lateral guide groove 212.

According to this configuration, the stocker moving unit 106 can perform forward and backward movement of the stocker 103 and horizontal rotation of the stocker 103. By moving the stocker 103 stored in the rack body 20 forward in the front-back direction and changing the orientation of the stocker 103 to be in the left-right direction, the operator can arrange the stocker 103 on the side of the upper tool holder 8. The tool holding groove 104 of the stocker 103 can be aligned in the left-right direction along the holder groove of the upper tool holder 8, and the long upper tool UT1 can be arranged in parallel with the extension line LA of the holder groove of the upper tool holder 8. Therefore, the long upper tool UT1 held by the stocker 103 can be arranged on the upper tool holder 8 by only sliding the long upper tool UT1 in the left-right direction.

Thus, the operator can perform the forward and backward movement of the stocker 103 and the horizontal rotation of the stocker 103 in a series of operations, the long upper tool UT1 held by the stocker 103 can be transferred to the upper tool holder 8 in a smooth manner. Thus, work efficiency can be improved when the long upper tool UT1 is attached to the upper tool holder 8 of the upper table 7 of the bending machine 1.

The stocker 103 according to the third embodiment may not only hold the long upper tools UT1, but also the short upper tools UT2.

In the embodiments described herein, the descriptions and drawings forming a part of the embodiments should not be understood as limiting the embodiments. From the embodiments, various alternatives, embodiments and operating techniques will become apparent to those skilled in the art.

The present disclosure inter alia provides the following embodiments:
According to one aspect, the present disclosure provides a tool storage device for storing a plurality of tools to be replaced by an operator with respect to tool holders provided in a left-right direction on a table of a bending machine, comprising:
a rack body arranged on a side of the bending machine in the left-right direction, the rack body provided with an opening on a front side; and
tool holding units provided inside the rack body for holding the tools,
the tool holding units comprising:
   a stocker linearly provided with tool holding grooves for holding the tools; and
   a stocker moving unit for advancing and retracting the stocker in a front-rear direction and horizontally rotating the stocker,
   wherein the stocker has, as states between which switching can be performed by manual operation of the operator, a first state in which the tool holding grooves are stored in the rack body in an orientation in the front-rear direction, and a second state in which the stocker advances to the outside of the rack body and the tool holding grooves are aligned in the left-right direction along a holder groove of the tool holder.

Preferably, the stocker moving unit comprises
an advancing and retracting mechanism provided in the rack body so as to be movable in the front-rear direction and advancing and retracting the stocker through the opening; and
a stocker rotation part connecting the advancing and retracting mechanism and the stocker to each other and horizontally rotating the stocker around a stocker rotation axis in an up-down direction.

Preferably, the tool holding units further comprise an arm rotation part for horizontally rotating the advancing and retracting mechanism around an arm rotation axis in the up-down direction.

Preferably, the advancing and retracting mechanism comprises
a slide that moves in the front-rear direction guided by rail members fixed to the rack body;
a holding block connected to the slide through the arm rotation part; and
an arm that advances and retracts in the longitudinal direction of the holding block by being guided by the holding block.

Preferably, a plurality of tool holding grooves are arranged in parallel in the stocker.

Preferably, a first tool holding unit adjacent to the bending machine and a second tool holding unit adjacent to the first tool holding unit are arranged so as to be adjacent to each other in the left-right direction.

Preferably, the tool held by the second tool holding unit is transferred to the tool holder via the tool holding grooves of the stocker of the first tool holding unit.

Preferably, the table is an upper table of the bending machine, and
the tool is an upper tool attached to an upper tool holder of the upper table.

Preferably, the tool storage device further comprises
a tool table that can be pulled out in the front-rear direction,
a plurality of lower tools attached to a lower tool holder of a lower table of the bending machine are mounted on the tool table in the front-rear direction, and
a lock lever of the bending machine advances to a lock position in a left-right direction and enters one of lock grooves of the tool table, so that the movement of the tool table in the front-back direction is restricted.

Preferably, the lock lever is arranged between the lower table and the tool table, moves in the left-right direction in a state of standing in the up-down direction, and reaches the lock position, so that it can be switched to a tilted state in the front-rear direction.

Preferably, the stocker moving unit comprises a pair of guide pins attached to the stocker at a distance in an extending direction of the tool holding groove, and inserted into guide grooves formed in the guide table to guide the movement of the stocker;
the guide groove of the guide table comprises longitudinal guide grooves which extend forward from the inside of the rack body to the outside of the rack body, and a lateral guide groove which extends in the left-right direction and to which front ends of the longitudinal guide grooves are connected; and
the pair of guide pins horizontally rotate the stocker by passing from the longitudinal guide grooves, through the connecting portion between the longitudinal guide grooves and the lateral guide groove, and reaching the lateral guide groove.

According to another aspect, the present disclosure provides a bending system comprising:
a bending machine comprising a table on which tool holders are provided in a left-right direction; and
a tool storage device for storing a plurality of tools to be replaced by an operator with respect to the tool holders on the table,
the tool storage device comprising:
   a rack body arranged on a side of the bending machine in the left-right direction, the rack body provided with an opening on a front side; and
   tool holding units provided inside the rack body and holding the tools,
   the tool holding units comprising:
      a stocker linearly provided with tool holding grooves for holding the tools; and
      a stocker moving unit for advancing and retracting the stocker in a front-rear direction, and horizontally rotating the stocker,
      wherein the stocker has, as states between which switching can be performed by a manual operation of the operator, a first state in which the tool holding grooves are stored in the rack body in an orientation in the front-rear direction, and a second state in which the stocker advances to the outside of the rack body and the tool holding grooves are aligned in the left-right direction along a holder groove of the tool holder.

The disclosure of the present application is related to the subject matter of Japanese Patent Application No. 2022-62509 filed April 4, 2022, the entire disclosure of which is incorporated herein by reference.

## Claims

1. A tool storage device (2) for storing a plurality of tools (UT1, UT2, LT1, LT2) to be replaced by an operator with respect to tool holders (6, 8) provided in a left-right direction on a table (5, 7) of a bending machine (1), the tool storage device comprising:
a rack body (20) arranged on a side of the bending machine (1) in the left-right direction, the rack body (20) provided with an opening on a front side; and
a tool table (65) configured to be pulled out in a front-rear direction,
wherein a plurality of lower tools (LT1, LT2) to be attached to a lower tool holder (6) of a lower table (5) of the bending machine (1) are mounted on the tool table (65) in the front-rear direction, and
wherein a lock lever (16) of the bending machine (1) advances to a lock position in the left-right direction and enters a lock groove (68) of the tool table (65), so that movement of the tool table (65) in the front-rear direction is restricted.

2. The tool storage device (2) according to claim 1, wherein
the lock lever (16) is arranged between the lower table (5) and the tool table (65), moves in the left-right direction in a state of standing in an up-down direction, and reaches the lock position, so that the lock lever (16) can be switched to a state of being tilted in the front-rear direction.

3. The tool storage device (2) according to claim 1 or 2, wherein a connecting unit (15) is provided on a side of the lower tool holder (6), and the lower tools (LT1, LT2) mounted on the tool table (65) are transferred to the lower tool holder (6) via the connecting unit (15).

4. A bending system comprising:
a bending machine (1) comprising a table (5, 7) on which tool holders (6, 8) are provided in a left-right direction; and
a tool storage device (2) for storing a plurality of tools (UT1, UT2, LT1, LT2) to be replaced by an operator with respect to the tool holders (6, 8) on the table (5, 7),
wherein the tool storage device (2) comprises:
a rack body (20) arranged on a side of the bending machine (1) in the left-right direction, the rack body (20) provided with an opening on a front side; and
a tool table (65) configured to be pulled out in a front-rear direction,
wherein a plurality of lower tools (LT1, LT2) to be attached to a lower tool holder (6) of a lower table (5) of the bending machine (1) are mounted on the tool table (65) in the front-rear direction, and
wherein a lock lever (16) of the bending machine (1) advances to a lock position in the left-right direction and enters a lock groove (68) of the tool table (65), so that movement of the tool table (65) in the front-rear direction is restricted.
